# EUROPÄISCHE PATENTSCHRIFT

(11) **EP 0 355 584 B1**
(45) Veröffentlichungstag und Bekanntmachung des Hinweises auf die Patenterteilung: **10.02.1993**
(21) Anmeldenummer: 89114717.5
(22) Anmeldetag: 09.08.1989
(51) Int. Cl.: B60S 1/52, B60S 1/60

(54) **Scheibenwaschanlage für Kraftfahrzeuge, insbesondere Streuscheibenwaschanlage**
Window washing arrangement for motor vehicles, in particular a washing arrangement for lamp glasses
Installation de lave-glace pour véhicules automobiles, notamment installation de lavage de glaces de phares

(30) Priorität: 26.08.1988 DE 3828999
(43) Veröffentlichungstag der Anmeldung: 28.02.1990
(73) Patentinhaber: Hella KG Hueck & Co., 59552 Lippstadt (DE)
(72) Erfinder: Orth, Peter, D-4780 Lippstadt (DE); Witt, Ulrich, D-4780 Lippstadt (DE)

(56) Entgegenhaltungen:
- DE-U- 8 802 529
- FR-A- 2 462 939
- FR-A- 2 523 909
- US-A- 3 059 857

## Beschreibung

Die Erfindung betrifft eine Scheibenwaschanlage für Kraftfahrzeuge, insbesondere Streuscheibenwaschanlage, mit einer Druckerzeugungseinrichtung zur Förderung der Reinigungsflüssigkeit, mit einem die Düse aus einer zurückversetzten Ruhelage gegen eine Federkraft in eine Arbeitsstellung ausfahrbaren Düsenträger, der von der unter Druck gebrachten Reinigungsflüssigkeit beaufschlagt wird, und mit einem Ventil, das erst in ausgefahrener Stellung des Düsenträgers öffnet.

Eine derartige Scheibenwaschanlage ist in der DE-C-24 18 140 oder in der US-A-3 059 857 offenbart. Bei dieser Scheibenwaschanlage ist das als Überdruckventil ausgebildete Ventil mit der Düse in einem Gehäuse vereinigt. Dadurch baut der meist auf der Stoßstange eines Kraftfahrzeugs unterhalb des Scheinwerfers angeordnete Düsenkörper sehr groß. Eine solche Ausführungsform wird vorteilhafterweise dann angewendet, wenn der Weg, den die Düse aus der Ruhelage in die Arbeitsstellung zurücklegen muß, sehr groß ist, da damit die Größe der Wassersäule zwischen Ventil und Düse unabhängig von dem Ausfahrweg stets sehr klein gehalten ist. Dieses ist wichtig, da das Wasser, welches nach jedem Spritzvorgang zwischen Ventil und Düse verbleibt, bei Kurvenfahrten durch die Fliehkraft herausgeschleudert wird, so daß bei einem erneuten Spritzvorgang dieser Raum erst wieder gefüllt werden muß. Außerdem tritt bei der Verwendung von Überdruckventilen bei der eingangs genannten Art von Scheibenwaschanlagen der Nachteil auf, daß der Düsenträger schon völlig herausgefahren sein muß, bevor die Druckerzeugungseinrichtung ihren maximalen Druck aufgebaut hat. Der maximale Druck ist, um ein bestimmtes Sprühbild zu erreichen, für eine bestimmte Düsenöffnung sowohl nach oben als auch nach unten begrenzt. Bei dem Mindestdruck muß sich das Überdruckventil mit Sicherheit öffnen, so daß der Druck, bei dem der Düsenträger mit Sicherheit ausfährt, noch niedriger sein muß. Deswegen müssen die wirksamen Druckflächen des Düsenträgers und des Betätigungsglieds im Überdruckventil in einem bestimmten Verhältnis aufeinander abgestimmt sein.

In der DE-C-35 18 685 ist eine Scheinwerferreinigungsanlage offenbart, bei der das Überdruckventil nicht am Kopf der ausfahrbaren Düse angeordnet ist, sondern am unteren Ende des Düsenträgers. Damit baut zwar der Düsenkörper wesentlich flacher, jedoch müssen die Druck-/Kraft-Verhältniise zwischen Düsenträger und Schließteil des Überdruckventils so aufeinander abgestimmt sein, daß die Düse zunächst in ihre Arbeitsstellung fährt, bevor das Venil öffnet.

Bei einer Ausführungsform aus der FR-A-2 523 909 ist der Düsenträger als Kolben ausgebildet, der von einer Druckerzeugungseinrichtung gegen die Kraft einer Feder angetrieben wird. Dabei weist der Kolben in seinem mittleren Bereich eine ringförmige Umfangsnut auf, die mit einer zur Düse führenden, zentralen Bohrung in Verbindung steht. Der Zylinder weist eine Bypass-Leitung auf, die den Zylinderinhalt vor dem Kolben bei einer bestimmten Kolbenstellung mit der Ringnut des Kolbens in Verbindung bringt. Eine solche Ausführungsform ist baulich sehr umständlich, da der Zylinder, die Bypass-Leitung und der Kolben eine zweifache Ringabdichtung erhalten müssen.

Aufgabe der Erfindung ist es, die Scheibenwaschanlage gemäß des Gattungsbegriffes nach Anspruch 1 derart zu verbessern, daß das Ventil in Flußrichtung gesehen vor dem Düsenträger angeordnet ist, so daß das die Düse tragende Gehäuse sehr klein bauen kann und ein Ventil verwendet wird, welches mit Sicherheit immer dann geöffnet ist, wenn die Düse in ihre Arbeitsstellung ausgefahren ist. Außerdem soll die Ventilausführung keine zusätzlichen Leitungen außerhalb des den Düsenträger umschließenden Gehäuses erforderlich machen. Diese Aufgabe wird erfindungsgemäß dadurch gelöst, daß die zur Düse führende Öffnung im Düsenträger von einem lose am Düsenträger anliegenden, die Ausfahrbewegung des Düsenträgers mitmachenden Deckel verschlossen ist, der kurz vor Erreichen der Arbeitsstellung der Düse mit seinem äußeren Randbereich gegen einen ortsfesten Anschlag anschlägt.

Bei einer vorteilhaften Ausgestaltung der Erfindung wird der Deckel von einer vorgespannten Druckfeder gegen den Düsenträger gepreßt. Dadurch ist es möglich, den Randbereich des Deckels mit einer großen Anzahl von möglichst großen Durchbrechungen zu versehen, so daß der Deckel kaum einen Strömungswiderstand bildet. Eine gleich wirkende Lösung kann dadurch erreicht werden, daß an den Düsenträger oder an den Deckel ein Dauermagnet angebracht wird und das jeweilige andere Bauteil ganz oder teilweise aus einem magnetisierbaren Werkstoff hergestellt ist.

Bei einer anderen und noch einfacheren Lösung wird der Deckel von der auf ihn gerichteten Strömung der Reinigungsflüssigkeit gegen den Düsenträger gepreßt.

Weiterhin ist es zweckmäßig, den Außenrand des Deckels so zu formen und den Außendurchmesser des Deckels so groß zu machen, daß der Deckel in dem den Düsenträger und das Ventil aufnehmenden Gehäuse geführt ist. Dabei weist der Deckel exzentrische, außerhalb der zur Düse führenden Zuflußöffnung des Düsenträgers liegende Durchflußöffnungen auf.

Bei einer besonders vorteilhaften Weiterbildung der Erfindung ist der Düsenträger von einer Rollmembran gebildet, die zwischen zwei Gehäuseteilen eingespannt ist, eine zum Deckel hin gerichtete Dichtlippe aufweist und mit ihrem zentrischen Bereich ein die Düse aufnehmendes Rohr trägt. Dieses ist eine besonders einfache und funktionssichere Konstruktion.

Damit sich die Rollmembran mit Sicherheit einrollt, ohne seitliche Aufblähungen zu erfahren, ist das die Düse aufnehmende Rohr als Innenhülse und das Gehäuse als Außenhülse ausgebildet, so daß die Rollmembran sowohl an dem Gehäuse als auch an der Innenhülse anliegend abrollt.

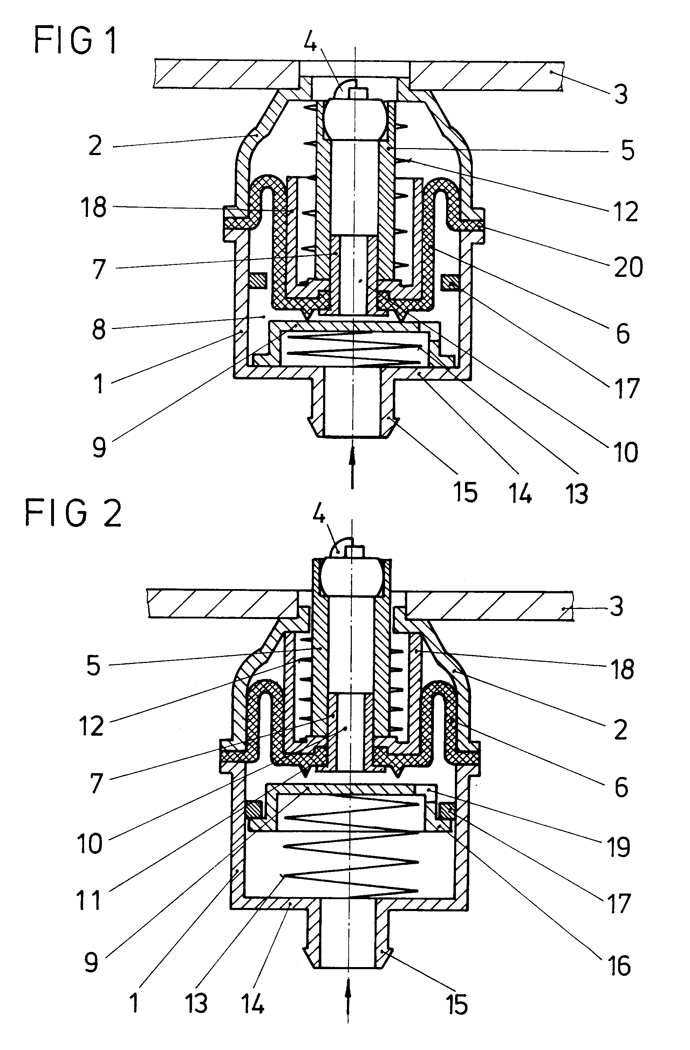

Die Zeichnung veranschaulicht ein vorteilhaftes Ausführungsbeispiel der Erfindung, und zwar zeigen
Figur 1 den Düsen- und Ventilaufbau mit der Düse in Ruhestellung und
Figur 2 mit der Düse in Arbeitsstellung.

Das die Düse und Ventileinrichtung tragende Gehäuse (1, 2) ist unterhalb einer Karosseriewandung (3) angeordnet. In der Ruhelage liegt die Düse (4) innerhalb des Gehäuses (1, 2). In Arbeitsstellung ist die Düse (4) aus ihrer zurückversetzten Ruhelage ausgefahren und ragt über die Karosseriewandung (3) hinaus.

Die Düse (4) ist in einem Düsenträger angeordnet, der aus einer rohrförmigen Innenhülse (5) und einer Rollmembran (6) besteht, die durch ein rohrförmiges Verbindungsstück (7) miteinander gekoppelt sind. Die Rollmembran (6) ist mit ihrem äußeren Bereich (20) zwischen die beiden Teile (1 und 2) des Gehäuses eingespannt. Der von dem Unterteil (1) des Gehäuses und der Rollmembran (6) gebildete Innenraum (8) bildet den Druckraum, der durch ein Ventil gegenüber der Düse (4) abgedichtet ist. Das Ventil wird gebildet durch den Deckel (9), der bei geschlossenem Ventil an der Membran (6) anliegt und die Zuleitungsöffnung (10) zu der Düse (4) abdichtet. Dazu weist die Rollmembran an ihrer zu dem Deckel gerichteten Fläche eine kreisringförmig umlaufende Dichtlippe (11) auf, die ein sicheres Abdichten zwischen Membran (6) und Deckel (9) auch bereits bei geringen Anpreßdrücken sicherstellt.

Die Rollmembran (6) wird bei abgeschalteter Druckerzeugungseinrichtung von der Druckfeder (12), die sich an dem Oberteil (2) des Gehäuses abstützt, gegen den Deckel (9) gepreßt, welcher gegen die Kraft der Feder (13) gegen den Boden (14) des Gehäuseunterteils (1) gedrückt wird. In dieser Lage ist die Zuleitung (10) zur Düse hermetisch gegenüber dem Zulauf (15) des Gehäuses (1, 2) abgeschlossen.

Wird die Druckerzeugungseinrichtung betätigt, strömt Reinigungsflüssigkeit durch den Anschlußstutzen (15) und Öffnungen (19) im Deckel (9) in den Innenraum (8) und baut hierin einen solch großen Druck auf, daß die Rollmembran (6) in Richtung zur Düse (4) angehoben wird. Dabei fährt der Düsenträger (5, 6, 7) aus seiner Ruhestellung heraus, so daß die Düse (4) aus der Karosseriewandung (3) herausragt. Beim Hochfahren des Düsenträgers (5, 6, 7) macht der Deckel (9) diese Bewegung mit und bleibt solange an der Dichtlippe (11) anliegen, bis der äußere Randbereich (16) des Deckels an den ortsfesten Anschlag (17) anschlägt. In dieser Lage verharrt der Deckel (9), wobei der Düsenträger (5, 6, 7) noch geringfügig weiter nach oben fährt. Damit wird die Zuflußöffnung (10), welche zur Düse (4) führt, geöffnet, so daß die Reinigungsflüssigkeit aus dem Innenraum (8) zu der Düse (4) strömen kann.

Wird die Druckerzeugungseinrichtung ausgeschaltet, so wird die Rollmembran (6) von der Druckfeder (12) nach unten gegen den Deckel (9) gepreßt. Dabei wird der Deckel (9) entgegen der Kraft der Feder (13) wieder gegen den Boden (14) des Gehäuseunterteils (1) gepreßt und das Ventil geschlossen.

Damit die Rollmembran (6), wenn sie von der unter Druck versetzten Reinigungsflüssigkeit beaufschlagt wird, nicht nach außen oder nach innen ausbaucht, wird diese zwischen dem Oberteil (2) des Gehäuses und einer Innenhülse (18) so geführt, daß die Rollmembran bei dem Rollvorgang sowohl am Gehäuseoberteil (2) als auch an der Innenhülse (18) anliegt. Die Innenhülse (18) bildet auch gleichzeitig ein zwischen Rollmembran (6) und Gehäuseoberteil (2) wirkendes Distanzstück.

## Patentansprüche

1. Scheibenwaschanlage für Kraftfahrzeuge, insbesondere Streuscheibenwaschanlage, mit einer Druckerzeugungseinrichtung zur Förderung der Reinigungsflüssigkeit, mit einem die Düse (4) aus einer zurückversetzten Ruhelage gegen eine Federkraft in die Arbeitsstellung ausfahrbaren Düsenträger (5, 6, 7), der von der unter Druck gebrachten Reinigungsflüssigkeit beaufschlagt wird, und mit einem Ventil, das erst in ausgefahrener Stellung des Düsenträgers (5, 6, 7) öffnet, dadurch gekennzeichnet, daß die zur Düse (4) führende Öffnung (10) im Düsenträger (5,6,7) von einem lose am Düsenträger (6, 7) anliegenden, die Ausfahrbewegung des Düsenträgers (6, 7) mitmachenden Deckel (9) verschlossen ist, der kurz vor Erreichen der Arbeitsstellung der Düse (4) mit seinem äußeren Randbereich (16) gegen einen ortsfesten Anschlag (17) anschlägt.

2. Scheibenwaschanlage nach Anspruch 1, dadurch gekennzeichnet, daß der Deckel (9) von einer vorgespannten Druckfeder (13) gegen den Düsenträger (5, 6, 7) gepreßt wird.

3. Scheibenwaschanlage nach Anspruch 1, dadurch gekennzeichnet, daß der Deckel (9) von der auf ihn gerichteten Strömung der Reinigungsflüssigkeit gegen den Düsenträger (5, 6, 7) gepreßt wird.

4. Scheibenwaschanlage nach einem der vorstehenden Ansprüche, dadurch gekennzeichnet, daß der Deckel (9) mit seinem Außenrand (16) in dem Gehäuseunterteil (1) geführt ist.

5. Scheibenwaschanlage nach Anspruch 4, dadurch gekennzeichnet, daß der Deckel (9) exzentrische, außerhalb der zur Düse (4) führenden Zuflußöffnung (10) des Düsenträgers (5, 6, 7) liegende Durchflußöffnungen (19) aufweist.

6. Scheibenwaschanlage nach einem der vorstehenden Ansprüche, dadurch gekennzeichnet, daß der Düsenträger von einer Rollmembran (6) und einer in ihrem Zentrum angeordneten, rohrförmigen Hülse (5) gebildet wird.

7. Scheibenwaschanlage nach Anspruch 6, dadurch gekennzeichnet, daß die Rollmembran (6) zwischen den beiden Gehäuseteilen (1, 2) eingespannt ist.

8. Scheibenwaschanlage nach Anspruch 6, dadurch gekennzeichnet, daß die Rollmembran (6) eine zum Deckel (9) gerichtete Dichtlippe (11) aufweist.

9. Scheibenwaschanlage nach einem der vorstehenden Ansprüche, dadurch gekennzeichnet, daß die Rollmembran (6) an dem Gehäuseoberteil (2) und einer Innenhülse (18) anliegend abrollt.

10. Scheibenwaschanlage nach Anspruch 9, dadurch gekennzeichnet, daß die die Düse (4) in ihre Ruhelage rückstellende Feder (12) mit ihrem einen Ende auf dem Boden der Innenhülse (18) aufliegt und sich mit dem anderen Ende am Gehäuseoberteil (2) abstützt.

## Claims

1. Window washer system for motor vehicles, more particularly a lens glass washer system, having a pressure generating device to convey the cleaning fluid, a nozzle carrier (5, 6, 7) which extends the nozzle (4) against the force of a spring into the operating position from a rest position in which it is set back, the pressurised cleaning fluid being applied under pressure to said nozzle carrier, and further having a valve which only opens once the nozzle carrier (4, 6, 7) is in the extended position, characterised in that the orifice (10) in the nozzle carrier (5, 6, 7) leading to the nozzle (4) is sealed by a cover (9) which rests loosely against the nozzle carrier (6, 7) and copies the movement in which the nozzle carrier (6, 7) is extended, said cover striking a fixed stop (17) by its outer rim area (16) shortly before the nozzle (4) reaches the operating position.

2. Window washer system according to claim 1, characterised in that a biassed compression spring (13) presses the cover (9) against the nozzle carrier (5, 6, 7).

3. Window washer system according to claim 1, characterised in that the cover (9) is pressed against the nozzle carrier (5, 6, 7) by the flow of cleaning fluid directed onto it.

4. Window washer system according to any of the preceding claims, characterised in that the cover (9) is set with its outer rim (16) in the lower part of the casing (1).

5. Window washer system according to claim 4, characterised in that the cover (9) incorporates eccentric ports (19) situated outside the inflow orifice (10) of the nozzle carrier (5, 6, 7) leading to the nozzle (4).

6. Window washer system according to any of the preceding claims, characterised in that the nozzle carrier is constituted by a roller membrane (6) and a tubular sleeve (5) disposed at the centre thereof.

7. Window washer system according to claim 6, characterised in that the roller membrane (6) is tensioned between the two parts of the housing (1, 2).

8. Window washer system according to claim 6, characterised in that the roller membrane (6) incorporates a sealing lip (11) directed towards the cover (9).

9. Window washer system according to any of the preceding claims, characterised in that the roller membrane (6) rolls against the upper part of the housing (2) and an inner sleeve (18).

10. Window washer system according to claim 9, characterised in that the spring (12) which resets the nozzle (4) into its rest position rests with one end on the base of the inner sleeve (18) and is supported on the upper part of the housing (2) by the other end.

## Revendications

1. Installation de lave-glace pour véhicules automobiles, notamment une installation de lavage de diffuseurs, comprenant un dispositif de production de pression destiné à refouler un liquide de nettoyage, un support de buse (5, 6, 7), portant la buse (4) qui peut se déplacer d'une position de repos escamotée à une position de travail à l'encontre d'une force élastique, et qui est alimenté en liquide de nettoyage mis sous pression, et une soupape qui ne s'ouvre que dans la position sortie du support de buse (5, 6, 7), caractérisé en ce que le fait que l'orifice (10) du support de buse (5, 6, 7) qui mène à la buse (4) est fermé par un couvercle (9) qui est appuyé librement contre le support de buse (6, 7), qui accompagne le mouvement de sortie du support de buse (6, 7), ce couvercle butant par sa région marginale extérieure (16) contre une butée fixe (17) juste avant que la buse (4) n'atteigne sa position de travail.

2. Installation de lave-glace selon la revendication 1, caractérisée en ce que le couvercle (9) est pressé contre le support de buse (5, 6, 7) par un ressort de compression précontraint (13).

3. Installation de lave-glace selon la revendication 1, caractérisée en ce que le couvercle (9) est pressé contre le support de buse (5, 6, 7) par le courant du liquide de nettoyage projeté vers ce couvercle.

4. Installation de lave-glace selon une des revendications précédentes, caractérisée en ce que le couvercle (9) est guidé par son bord extérieur (16) dans la partie inférieure (1) du boîtier.

5. Installation de lave-glace selon la revendication 4, caractérisée en ce que le couvercle (9) présente des ouvertures de passage (19) excentrés, situées à l'extérieur de l'orifice d'arrivée (10) du support de buse (5, 6, 7) qui mène à la buse (4).

6. Installation de lave-glace selon une des revendications précédentes, caractérisée en ce que le support de buse est formé d'une membrane roulante (6) et d'un manchon tubulaire (5) disposé au centre de cette membrane.

7. Installation de lave-glace selon la revendication 6, caractérisée en ce que la membrane roulante (6) est serrée entre les deux parties (1, 2) du boîtier.

8. Installation de lave-glace selon la revendication 6, caractérisée en ce que la membrane roulante (6) présente une lèvre d'étanchéité (11) dirigée vers le couvercle (9).

9. Installation de lave-glace selon une des revendications précédentes, caractérisée en ce qu'en roulant la membrane roulante (6) s'appuie contre la partie supérieure (2) du boîtier et contre un manchon intérieur (18).

10. Installation de lave-glace selon la revendication 9, caractérisée en ce que le ressort (12) qui rappelle la buse (4) à sa position de repos porte par une de ses extrémités contre le fond du manchon intérieur (18) et prend appui contre la partie supérieure (2) du boîtier par son autre extrémité.
